# EUROPEAN PATENT APPLICATION

(11) **EP 3 042 594 A1**
(43) Date of publication of application: **13.07.2016**
(21) Application number: 15202583.9
(22) Date of filing: 23.12.2015
(51) Int. Cl.: A47J 36/12, A47J 31/46

(54) **AUTOMATIC MACHINE FOR PREPARING BEVERAGES, SUCH AS ESPRESSO COFFEE, CAPPUCCINO AND THE LIKE**

(30) Priority: 09.01.2015 IT MI20150008
(71) Applicant: Swiss Caffe Asia Ltd, Hong Kong (HK)
(72) Inventor: AARDENBURG, Cornelis J.M., 6900 LUGANO (CH)
(74) Representative: Modiano, Micaela Nadia

(57) **Abstract**

An automatic machine for preparing beverages, such as espresso coffee, cappuccino and the like, which comprises a water tank (3), at least one pump (20), at least one heating unit (5), and an infusion assembly (8) in order to accommodate capsules or pods (14) for preparing beverages, and means (11) for dispensing hot water in jets, the machine further comprising at least one cooling unit (5) adapted to be connected to the infusion assembly (8).

## Description

The present invention relates to an automatic machine for preparing beverages, such as espresso coffee, cappuccino and the like. More specifically, the invention relates to an automatic machine for preparing espresso coffee by way of capsules or pods, cappuccino, latte macchiato and the like, also using capsules of coffee.

As is known, automatic machines are increasingly widespread for preparing espresso coffee and cappuccino, which enable the user, for example in his/her household, to prepare an espresso coffee and/or cappuccino that are of similar quality to those served in a bar.

Usually, in order to prepare a cappuccino, steam nozzles are required which are capable of frothing the milk, and thus emulsify it.

The point of exit from the steam nozzles is usually then guided manually to the surface of the milk, which has been placed in a container, so that when the steam is released a three-phase region is created that comprises steam/air/milk, thus generating the emulsified milk.

To this end, steam emission nozzles are made which are simply submerged under the surface of the milk, and by way of a tube, which takes in air above the surface of the milk, the air is drawn into the egress of the steam by the pressure generated by the flowing steam, so that the above mentioned three-phase region is created under the surface of the milk and the milk is emulsified.

The drawbacks suffered by the solution described above consist in that there are still parts of the machine that are in direct contact with the milk, and which thus require, at the end of the operation to froth the milk, rinsing and cleaning in order to prevent residues of milk from remaining stuck to the nozzle.

It needs to be remembered furthermore that the fat content of the milk is what determines the quality of the emulsion that is created, but it is also what remains stuck to the components of the machine that come into contact with the milk.

The aim of the present invention is to provide a machine for preparing beverages, particularly espresso coffee, cappuccino and the like, in which the emulsion of the milk occurs without any part of the machine coming into contact with the milk.

Within this aim, an object of the present invention is to provide a machine for preparing beverages, such as espresso coffee, cappuccino and the like, which does not require the use of ground coffee, since it can rely on the use of capsules.

Another object of the present invention is to provide a machine for preparing beverages, such as espresso coffee, cappuccino and the like, which does not involve the use of steam in order to emulsify the milk for the preparation of the cappuccino.

Another object of the present invention is to provide a machine for preparing beverages that is highly reliable, easily and practically implemented and low cost.

This aim and these and other objects which will become better apparent hereinafter are achieved by an automatic machine for preparing beverages, such as espresso coffee, cappuccino and the like, which comprises a water tank, at least one pump, at least one heating unit, and an infusion assembly in order to accommodate capsules or pods for preparing beverages, and means for dispensing hot water in jets, characterized in that it comprises at least one cooling unit adapted to be connected to said infusion assembly.

Further characteristics and advantages of the invention will become better apparent from the description of preferred, but not exclusive, embodiments of the machine according to the invention, which are illustrated by way of non-limiting example in the accompanying drawings wherein:
Figure 1a is a schematic view of a first embodiment of a machine according to the invention in a first operating mode thereof;
Figure 1b is a schematic view of the machine in Figure 1a in a second operating mode thereof;
Figure 2a is a schematic view of a second embodiment of the machine according to the invention in a first operating mode thereof;
Figure 2b is a schematic view of the machine in Figure 2a in a second operating mode thereof;
Figure 3a is a schematic view of a third embodiment of the machine according to the invention in a first operating mode thereof;
Figure 3b is a schematic view of the machine in Figure 3a in a second operating mode thereof;
Figure 3c is a schematic view of the machine in Figures 3a and 3b in a third operating mode thereof;
Figure 3d is a schematic view of the machine in Figures 3a, 3b and 3c in a fourth operating mode thereof.

With reference to the figures, the machine according to the invention, generally designated by the reference numeral 1, comprises a water tank 3, an optional flow meter 4 connected to the output of the tank 3 and in turn connected to at least one pump 20, which is adapted to pump water into at least one heating/cooling unit 5, which in turn dispenses the water to an infusion assembly 8 which is adapted for the use of beverages in general that are contained in capsules 14 such as, for example, espresso coffee and the like.

The beverage dispensed from the capsule passes, through a duct 18, to a dispensing opening 10 which is arranged in a position above a collection vessel 12.

The water pumped by at least one pump 20 passes through a duct 7 to a solenoid valve, or similar mechanical valve, to the heating/cooling unit 5, and through a duct 15 it arrives at a further dispensing opening 11, arranged substantially in parallel to the dispensing opening 10, in order to dispense hot water in jets into the vessel 12.

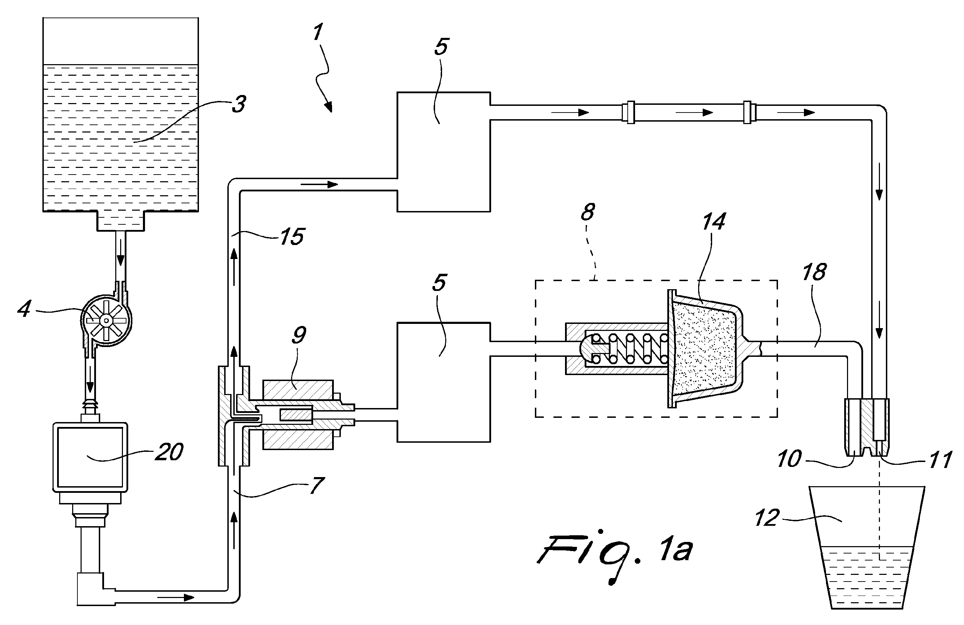

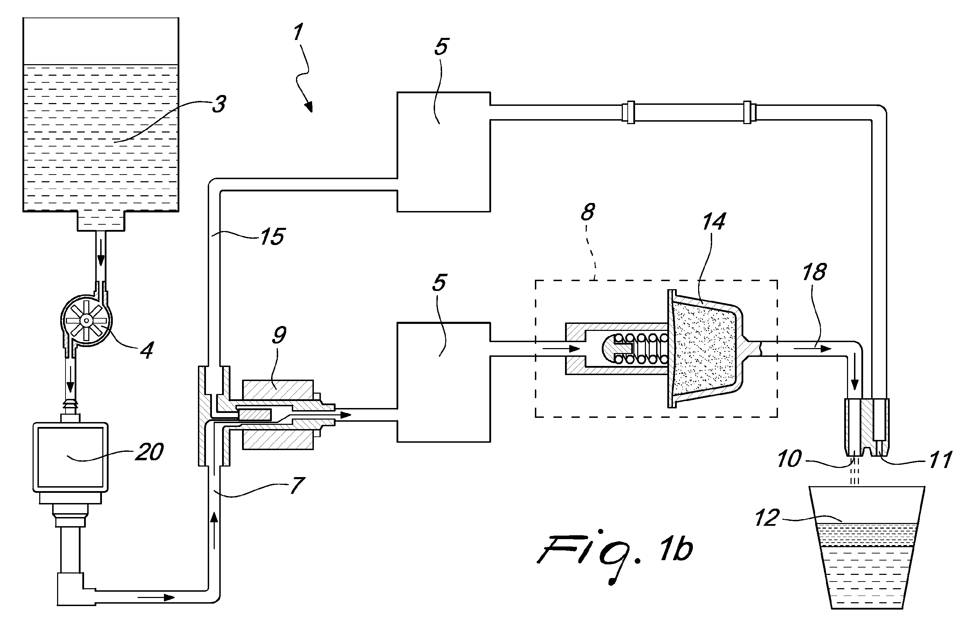

With reference to Figures 1a and 1b, which show a first embodiment of the invention, it should be noted that in such embodiment the heating/cooling units are two in number, arranged in parallel, with a solenoid valve 9 or similar mechanical valve which diverts the flow of water originating from the pump 20 through the duct 7 to the first heating/cooling unit 5, and through a duct 15 to the second heating/cooling unit, the output of which is directed toward the dispensing opening 11.

The embodiment shown in Figure 1a shows the case in which the machine according to the invention is used to dispense hot water, where therefore the route of the water runs from the pump 20 through the duct 7 and solenoid valve or mechanical valve 9 to the duct 15 and from there to the heating/cooling unit 5 and from there to the dispensing opening 11.

Figure 1b on the other hand shows the case in which the dispensing of the water occurs through the heating/cooling unit 5 arranged upstream of the infusion assembly 8, for the dispensing therefore of a beverage through the dispensing opening 10.

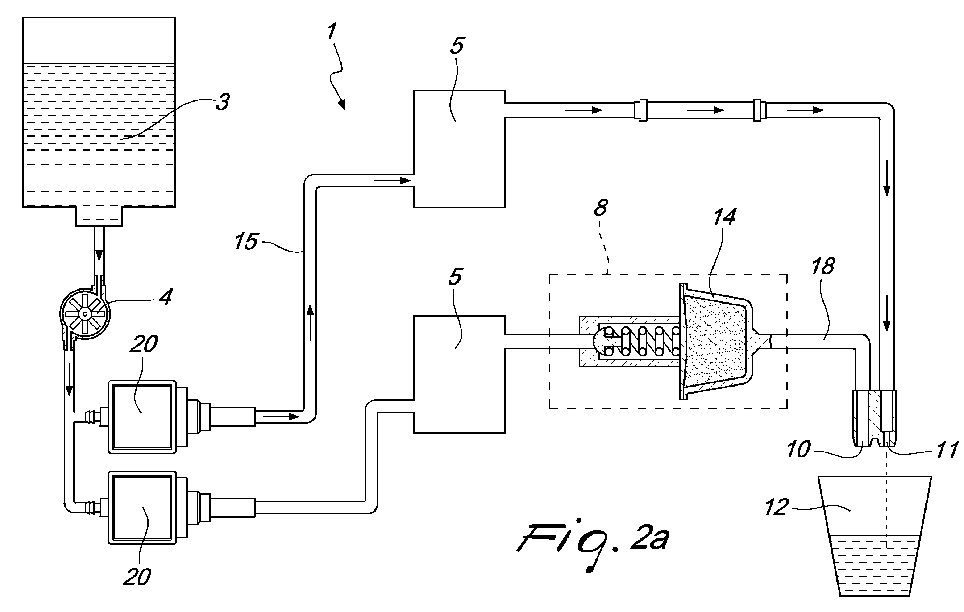

Figure 2a shows a second embodiment of the machine according to the invention, in which, differently from the first embodiment, there are two pumps 20, each one designed to drive a single heating/cooling unit 5, without the interposition of any solenoid valve.

In this embodiment, similarly to the previous embodiment, hot or cold water can be dispensed in jets, together with the dispensing of a hot or cold beverage through the infusion assembly 8 and the corresponding capsule 14.

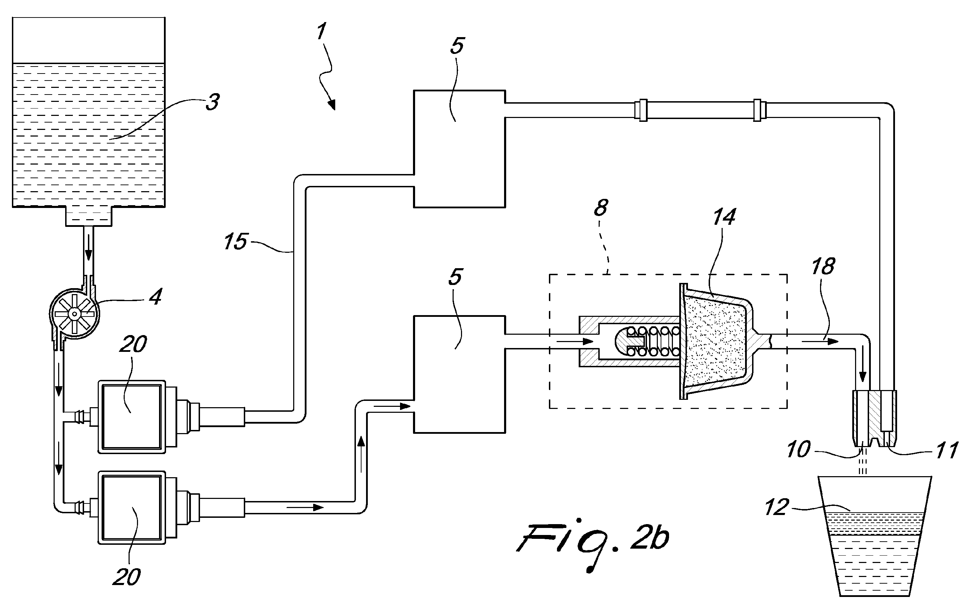

Figure 2a then shows the case in which the pump 20 that is used is the one connected to the heating/cooling unit 5 and directly to the outlet dispensing 11, while Figure 2b shows the case in which the other pump 20 is activated, i.e. the one that is connected to the heating/cooling unit 5 which in turn is connected to the infusion assembly 8.

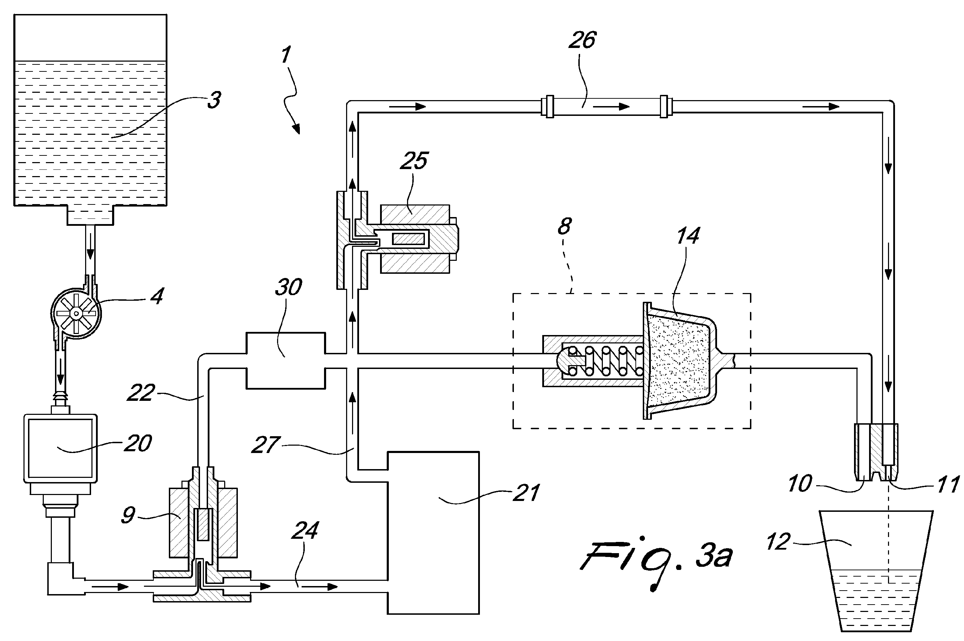

Figures 3a-3d show a third embodiment of the machine according to the invention, in which the heating/cooling unit 5 is replaced by a chiller 30 and by a heating unit 21, separate from each other, and in which there is a valve 9 immediately downstream of the single pump 20. The valve 9 diverts the flow of water originating from the pump 20, through a duct 22, to the chiller 30 and, through a duct 24, to the heating unit 21.

A second valve 25 is provided along the duct portion 26 which leads to the dispensing opening 11.

The infusion assembly 8 is connected downstream of the chiller 30 and of the heating unit 21.

Figure 3a shows a first operating mode of the third embodiment in which hot water is dispensed in jets, with the water starting therefore from the pump 20, passing through the valve 9, the duct 24, and being heated in the heating unit 21, then passing through a duct 27 and through the valve 25 in order to then pass through the duct 26 and then arrive at the outlet dispensing 11.

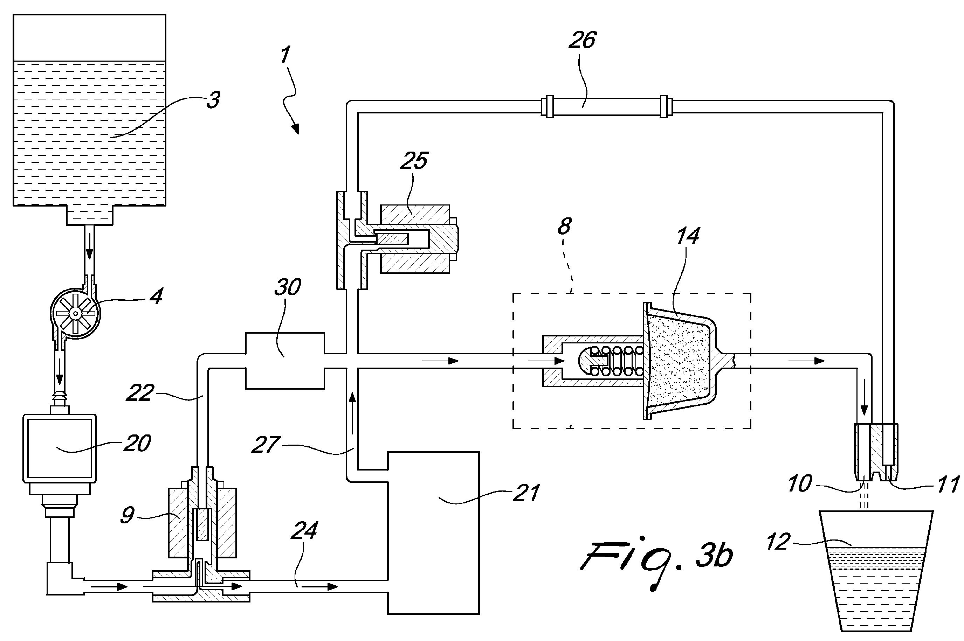

Figure 3b shows a second operating mode of the third embodiment in which a hot beverage is dispensed into the vessel 12 by way of the infusion assembly 8; in this case the water pumped by the at least one pump 20 passes through the valve 9, the heating unit 21, and is diverted to the infusion assembly 8 in order to dispense the beverage through the dispensing opening 10.

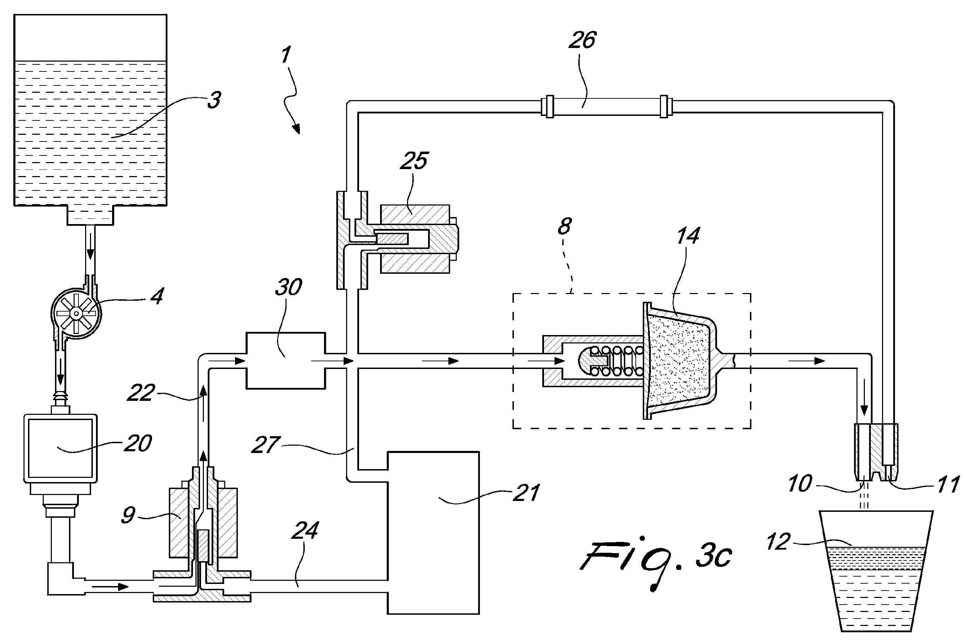

Figure 3c shows a third operating mode of the third embodiment of the machine according to the invention, in which a cold beverage is dispensed and, in this case, the water exiting from the pump 20 passes through the valve 9, the chiller 30 and the infusion assembly 8, in order to then dispense a cold beverage, contained in powder form in the capsule 14, through the dispensing opening 10.

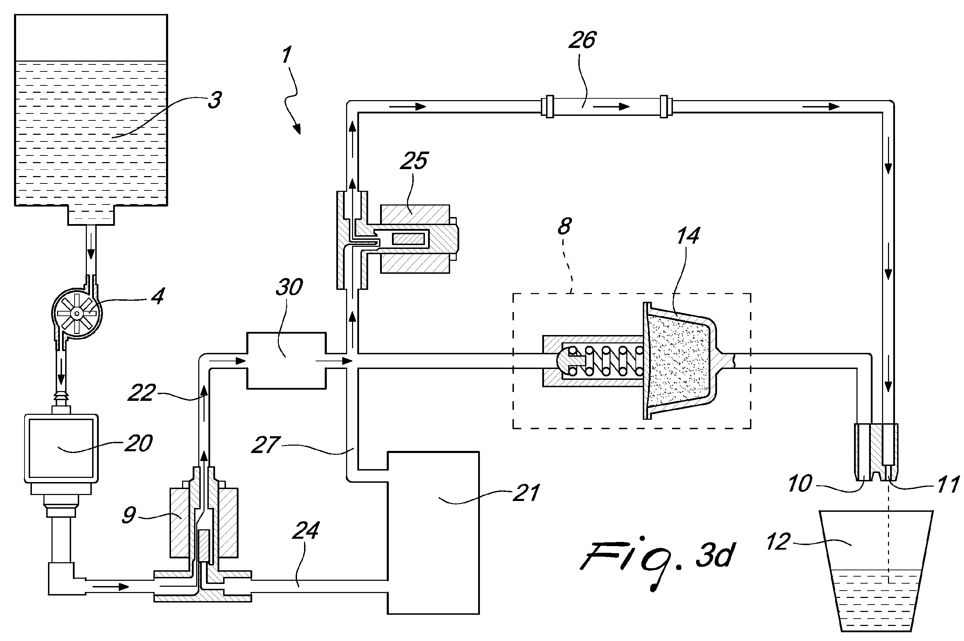

Figure 3d shows a fourth operating mode of the machine according to the invention, in its third embodiment, in which cold water is dispensed in jets into the vessel 12. In this case, the pump 20 pumps water through the valve 9, the chiller 30, the additional valve 25, the duct 26, in order to arrive at the dispensing opening 11 and then be introduced into the vessel 12.

As can therefore be seen from the foregoing description and from the accompanying figures, the machine according to the invention makes it possible to dispense hot/cold water in jets, a hot/cold beverage, and also to froth milk in a highly efficient manner, without having to make use of the generation of steam, thus saving energy.

The dispensing of hot or cold water can occur with a pulsed highpressure jet.

It thus appears evident that the machine according to the invention is highly versatile, since it is capable of preparing hot or cold beverages, dispensing hot or cold water in jets, and producing an emulsion of milk contained in a container.

In practice it has been found that the machine according to the present invention fully achieves the set aim and objects, in that it makes it possible to dispense different beverages, hot and/or cold, as well as cappuccino with emulsified milk, from a same machine that can be used with capsules and/or pods containing a preparation for beverages.

The machine, thus conceived, is susceptible of numerous modifications and variations, all of which are within the scope of the appended claims. Moreover, all the details may be substituted by other, technically equivalent elements.

In practice the materials employed, and the contingent dimensions and shapes, may be any according to requirements and to the state of the art.

The disclosures in Italian Patent Application No. MI2015A000008 (102015902320513) from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An automatic machine (1) for preparing beverages, such as espresso coffee, cappuccino and the like, which comprises a water tank (3), at least one pump (20), at least one heating unit (5; 21), and an infusion assembly (8) in order to accommodate capsules or pods (14) for preparing beverages, and means (11) for dispensing hot water in jets, **characterized in that** it comprises at least one cooling unit (5; 30) adapted to be connected to said infusion assembly (8).

2. The machine according to claim 1, **characterized in that** it comprises a second cooling unit (5) adapted to be connected to said jet dispensing means (11).

3. The machine according to claim 1 or 2, **characterized in that** said at least one cooling unit (5) is integrated in said at least one heating unit (5).

4. The machine according to one or more of the preceding claims, **characterized in that** it comprises a valve (9) arranged downstream of said at least one pump (20) and upstream of said heating/cooling units (5; 21, 30).

5. The machine according to one or more of the preceding claims, **characterized in that** said at least one pump (20) comprises a first pump (20) adapted to be connected to a first heating/cooling unit (5), which in turn is connected to said infusion assembly (8), which in turn is connected to a dispensing outlet (10), and a second pump (20), which is connected directly to a second heating/cooling unit (5), which in turn is connected directly to said jet dispensing means (11).

6. The machine according to one or more of the preceding claims, **characterized in that** said cooling unit (30) is separate from said heating unit (21).

7. The machine according to one or more of the preceding claims, **characterized in that** said cooling unit (30) is connected downstream of said pump (20) and of said valve (9), said valve (9) being adapted to also connect said pump (20) to said heating unit (21).

8. The machine according to claim 7, **characterized in that** it comprises an additional valve (25) which is connected between said cooling unit (30), said heating unit (21), and said jet dispensing means (11).

9. The machine according to one or more of the preceding claims, **characterized in that** said cooling unit (5; 30) is adapted to be connected, in an operating mode, directly to said infusion assembly (8).
